# EUROPEAN PATENT SPECIFICATION

(11) **EP 4 100 346 B1**
(45) Date of publication and mention of the grant of the patent: **22.11.2023**
(21) Application number: 21702320.9
(22) Date of filing: 15.01.2021
(51) Int. Cl.: B65G 49/06

(54) **SYSTEM FOR STORING AND HANDLING GLASS SLABS**
SYSTEM ZUM LAGERN UND HANDHABEN VON GLASSCHEIBEN
SYSTÈME DE STOCKAGE ET DE MANIPULATION DE PLAQUES DE VERRE

(30) Priority: 05.02.2020 IT 202000002275
(43) Date of publication of application: 14.12.2022
(73) Proprietor: FORVET S.p.A. Costruzione Macchine Speciali, 10040 Volvera (TO) (IT)
(72) Inventor: GARIGLIO, Davide, 10040 Volvera (IT)
(74) Representative: Notaro, Giancarlo
(86) International application number: PCT/IT2021/050011
(87) International publication number: WO 2021/156895

(56) References cited:
- CN-A- 104 310 069
- DE-A1- 19 525 515
- DE-A1- 19 600 348
- US-A- 5 511 671
- US-A1- 2011 170 991

## Description

The present invention refers to a system for storing and handling glass slabs which is able to perform all processes necessary for the production of a finished glass slab in a single machine, and to the related production process.

Systems for storing glass slabs are known in the art, and are used in production plants to store the slabs coming from stations in which the production process is performed, for example cutting, grinding, drilling, washing, waiting to perform further processing, such as hardening, which must be performed simultaneously on a significant number of slabs, or before being sent outside the plant for shipment and sale.

However, these systems for storing glass slabs are not satisfactory and have the problem of requiring considerable space for the occupation of areas of passage of the slabs between one process and another, especially in case of processes, such as tempering, in which, in order to obtain a good quality of the process, the slabs must be spaced and arranged in an appropriate manner with the same thickness, thus requiring the selection of slabs of different sizes and among a large quantity of stored slabs.

Documents DE-A1-196 00 348, CN-A-104 310 069 and US-A1-2011 / 170991 describe systems according to the preamble of Claim 1.

Object of the present invention is solving the aforesaid prior art problems, by providing a system for storing and managing glass slabs which allows storing, and selecting from among them, a large number of glass slabs, having a great variety of sizes.

The aforementioned and other purposes and advantages of the invention, which will appear from the following description, are achieved with a system for the storage of glass slabs such as the one described in Claim 1. Preferred embodiments and non-trivial variations of the present invention are the subject matter of the dependent claims.

It will be immediately obvious that innumerable variations and modifications (for example related to shape, dimensions, arrangements and parts with equivalent functionality) can be made to what is described.

The present invention will be better described by some preferred embodiments thereof, provided as a non-limiting example, with reference to the enclosed drawings, in which:

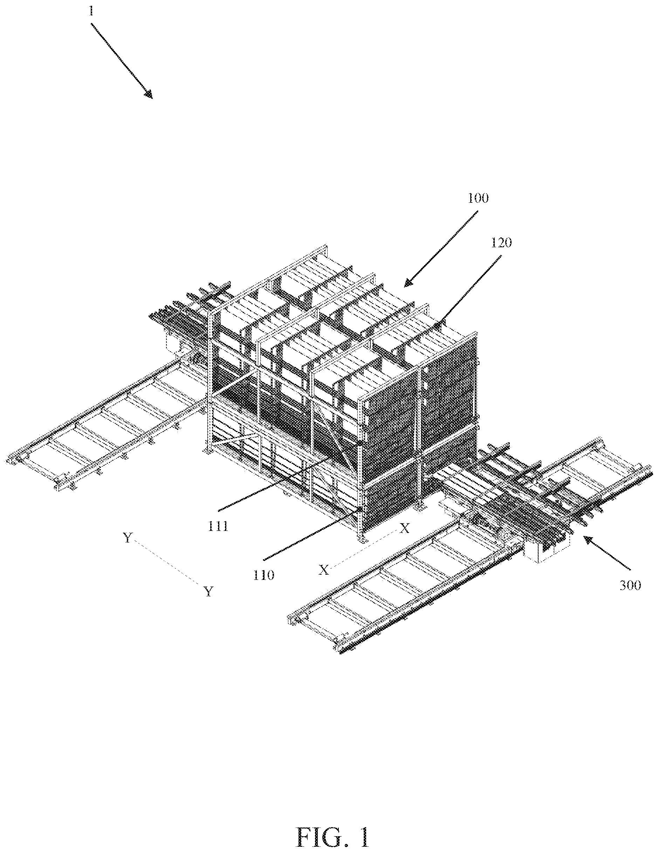

- Figure 1 is a perspective view of a system for storing glass slabs according to the present invention;

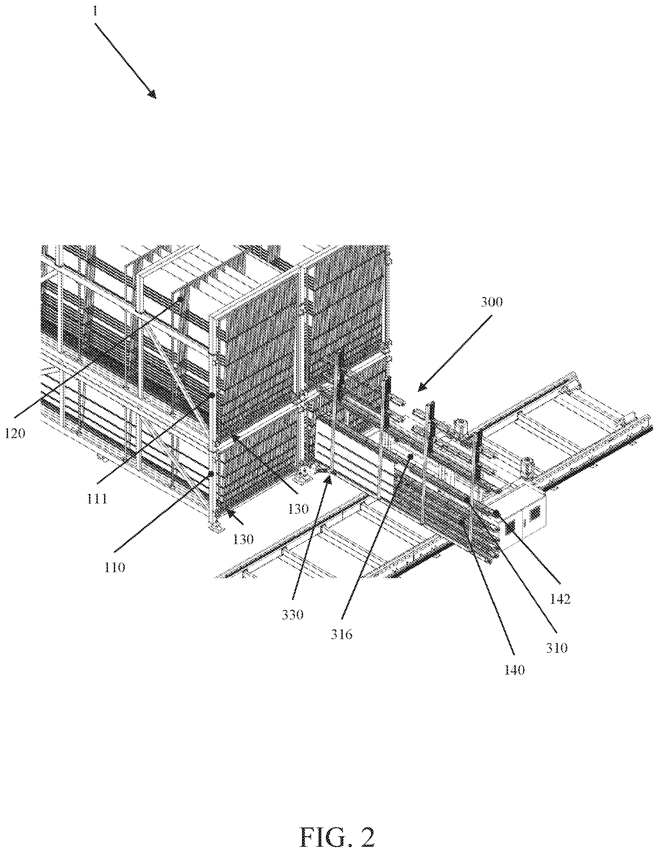

- Figure 2 is a perspective view of a system for storing glass slabs according to the present invention in a first configuration;

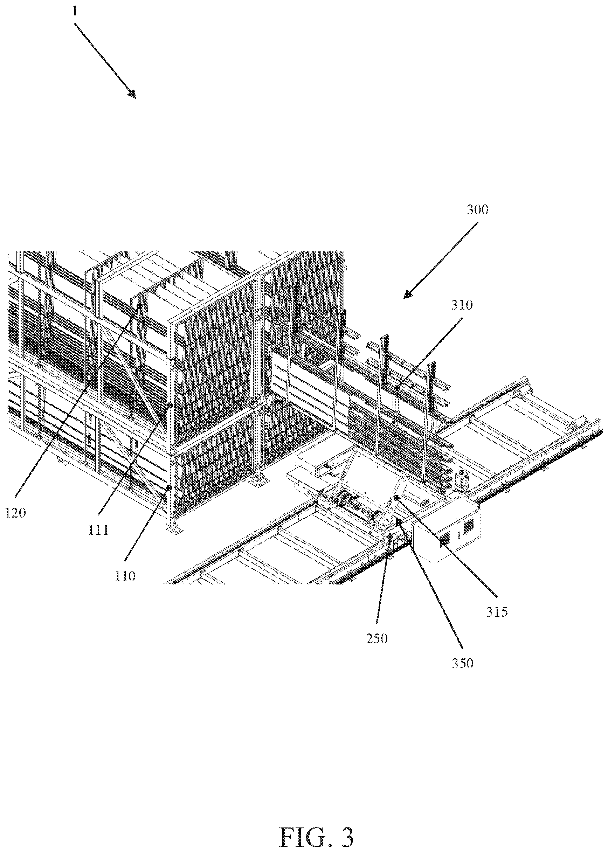

- Figure 3 is a perspective view of a system for storing glass slabs according to the present invention in a second configuration;

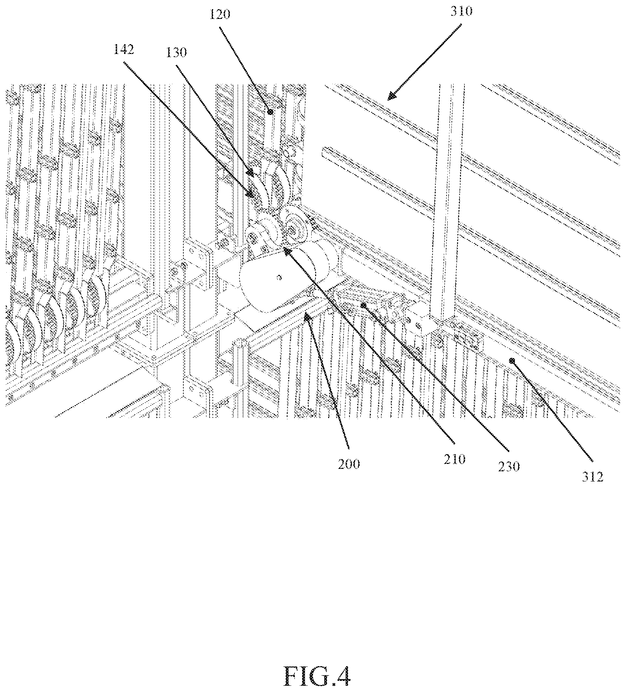

- Figure 4 is a perspective view of an enlarged detail of a system for storing glass slabs according to the present invention;

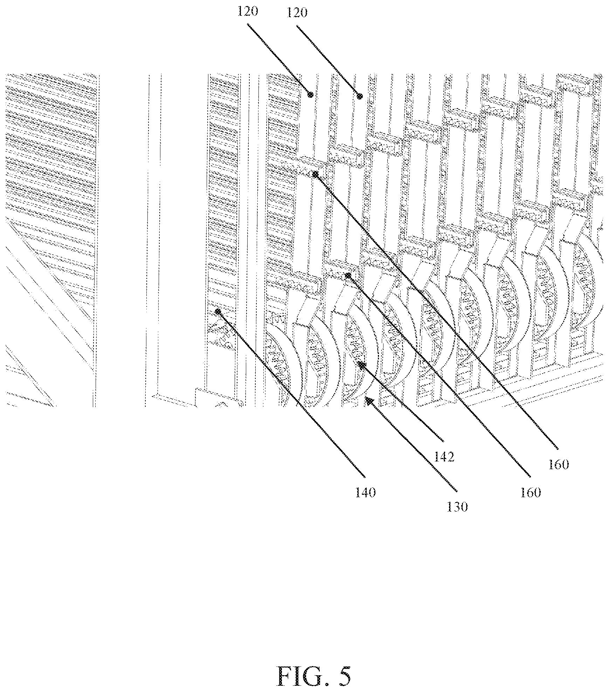

- Figure 5 is a perspective view of an enlarged detail of a system for storing glass slabs according to the present invention;

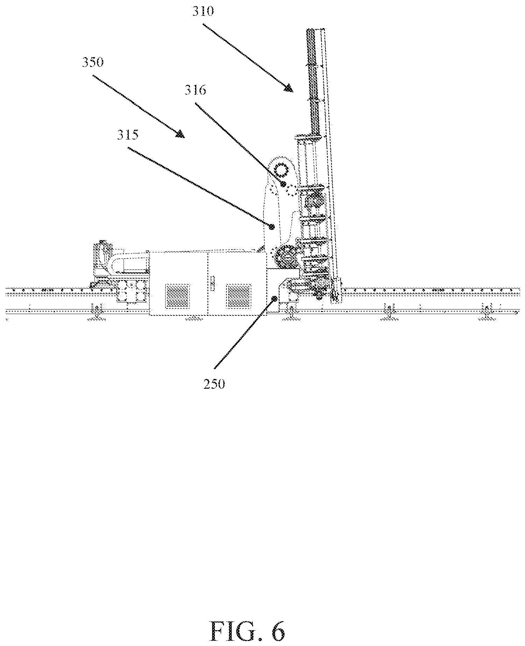

- Figure 6 is a side view of an enlarged detail of a system for storing glass slabs according to the present invention; and

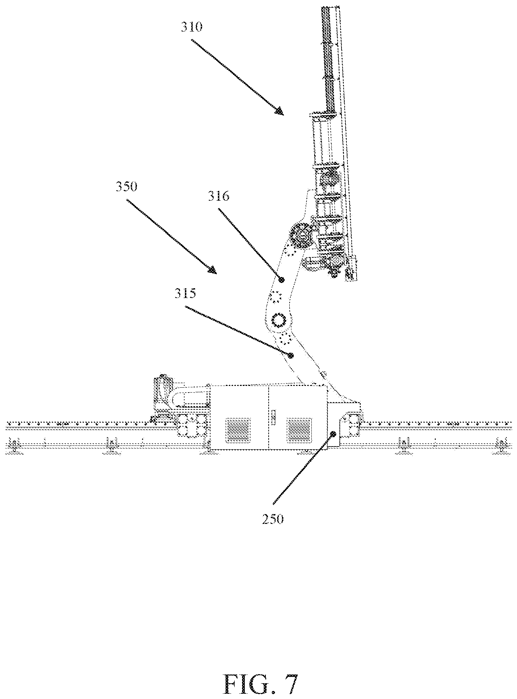

- Figure 7 is a side view of an enlarged detail of a system for storing glass slabs according to the present invention.

With reference to the Figures, the system 1 for storing glass slabs of the present invention is shown and described, which comprises a warehouse 100 for storing glass slabs and a shuttle 300 for receiving and delivering transfer of the glass slabs to and from said warehouse 100.

The warehouse 100 for storing glass slabs includes:
- a lower support frame 110 and an upper support frame 111, vertically superimposed on each other;
- a plurality of first frames 120, fixed to said support frames 110, 111 so that, in each frame, the first frames 120 are parallel to each other and aligned along a longitudinal direction X-X transverse to the plane of said first frames 120, each frame being configured to receive and/or transfer and support at least one glass slab in a substantially vertical/inclined orientation;
- a first slab handling unit 130 connected to the lower end of each first frame 120 and extended along a transverse direction Y-Y to said longitudinal direction X-X, configured to support at least one glass slab and make it advance in the transverse direction Y-Y, in a bi-directional advancement.

The shuttle 300 for receiving and transferring the glass slabs to and from the warehouse 100 includes:
- a support structure 250 translatable, preferably by means of guide means of a known type, along a direction parallel to said longitudinal direction X-X;
- a second frame 310 connected in a rotatable way to the support structure 250 to position itself between a substantially horizontal and a substantially vertical/inclined position so as to align the second frame 310 with any of the first frames 120;
- a second slab handling unit 330 connected to the second frame 310 and extended along a transverse direction Y-Y to said longitudinal direction X-X, configured to support at least one glass slab and make it advance in the transverse direction Y-Y, along two advancement directions, to receive it and/or transfer it to and from the warehouse 100.

The shuttle 300 comprises a lifting assembly 350 connected to the second frame 310 and configured to lift the second frame 310 so as to receive or transfer the glass slab to and from the upper support frame 111 superimposed on the lower frame 110 to support the warehouse 100.

Preferably, the lifting assembly 350 comprises a first arm 315 rotatably connected to the support structure 250, for arranging the second frame 310 from a substantially horizontal position to a substantially vertical position so as to align the second frame 310 to any of the first frames 120, and a second arm 316 rotatably connected to the first arm to lift the second frame 310 so as to receive or transfer the glass slab to and from the upper support frame 111 superimposed on the lower support frame 110.

In a known way, the lifting unit 350 comprises motorized or pneumatic units configured to move the first arm 315 and the second arm 316.

The second frame 310 comprises a control device 200 operable and selectively engageable with each first slab handling unit 130 so as to control its movement; preferably the second frame 310 comprises a crosspiece 312 extending along the transverse direction Y-Y, and the control device 200 is connected to said crosspiece 312 so as to engage with a first group for handling slabs 130, when the second frame 310 is in the substantially vertical/inclined position and aligned with any of the first frames 120 to receive and/or transfer the glass slabs.

The frames 120, 310 comprise vertical/inclined and horizontal profiles connected together to form a rigid structure, so as to be able to receive and support at least one glass slab; , the first frames 120 further comprise anti-friction brushes 160 fixed on the profiles and configured to support and guide the glass slabs during the translation supported by the first frames 120 avoiding chipping, scratches and breakages during the movement inside said supporting frame 110, 111.

Preferably, each first frame 120 is inclined with respect to the vertical direction orthogonal to the installation plane/floor of the warehouse 100, by an angle comprised between 2° and 10°, more preferably an angle of 3°.

Preferably, the first slab handling unit 130 comprises a slab handling system 140, for example a conveyor belt, connected to each first frame 120, preferably at the lower end of each first frame 120, each slab handling system 140 being wrapped between two movement members 142, for example rotatable on bearings, so as to advance along two advancement directions.

Preferably, said movement members 142 comprise a toothed wheel, but they can comprise pulleys, wheels or pinions.

The 2. control device 200 comprises a control member 210 which can be engaged in each of said movement members 142 so as to control their movement, so as to move each glass slab resting on the slab handling system 140 of the first slab handling unit 130.

Preferably, the control device 200 comprises handling means 230, for example a linear actuator, to move the control member 210 in a rotatable way, preferably around an axis of the control member 210 parallel to the axis of each movement member 142 of the first slab handling unit 130. In this way, it is possible to operatively and selectively engage any movement member 142 of a slab handling system 140 in order to receive and store the glass slabs in the warehouse 100.

In particular, the handling means 230 are configured to move the control member 210, for example by making it rotate to connect it alternatively to any movement member 142 of a slab handling system 140 in order to move the glass slabs to make them exit or enter the warehouse 100.

Preferably, the handling means 230 comprise motorized or pneumatic units configured to move the control member 210 between a first engagement position with any of the movement members 142 and a second disengagement position.

Preferably, the control member 210 comprises for example a cascade of gears, but it could also be made with pulleys, wheels, and the like.

Preferably, the second slab handling unit 330 comprises a slab handling system 140 connected to the second frame 310, preferably a plurality of conveyor belts 140, each slab handling system 140 being wrapped between two handling members 142, for example rotatable on bearings, so as to advance along two advancement directions both when the second frame 310 is in the substantially horizontal position, to receive or transfer the glass slab, and in the substantially vertical/inclined position, to receive or transfer the glass slab to and from the lower support frame 110 or the upper support frame 111 of the warehouse 100.

In a known way, the system 1 for storing glass slabs according to the invention comprises an electronic management and control unit configured to command and coordinate the movements of the slabs during their storage.

Advantageously, the system 1 for storing glass slabs of the invention allows storing, and selecting from among them, a large number of glass slabs, having a great variety of sizes.

## Claims

1. System (1) for storing and handling glass slabs comprising a warehouse (100) for the storage of glass slabs and a shuttle (300) for receiving and transferring the glass slabs from and to said warehouse (100), which includes:
- a lower support frame (110) and an upper support frame (111), vertically superimposed on each other;
- a plurality of first frames (120) fixed to said upper and lower support frames (110, 111) so that, in each of said upper and lower support frames, the first frames (120) are parallel to each other and aligned along a longitudinal direction (X-X) transverse to the plane of said first frames (120), each first frame (120) being configured to receive and/or transfer and support at least one glass slab in a vertical/inclined orientation:
- a first slab handling unit (130) connected to the lower end of each first frame (120) and extended along a transverse direction (Y-Y) to said longitudinal direction (X-X), configured to support at least one glass slab and make it move forward in the transverse direction (YY), along two advancement directions,
said shuttle (300) for receiving and transferring the glass slabs to and from the warehouse (100) comprising:
- a support structure (250) translatable along a direction parallel to said longitudinal direction (X-X);
- a second frame (310) rotatably connected to the support structure (250) to position itself between a horizontal and a substantially vertical/inclined position so as to align the second frame (310) to any of the first frames (120);
- a second slab handling unit (330) connected to the second frame (310) and extended along a transverse direction (Y-Y) to said longitudinal direction (X-X), configured to support at least one glass slab and make it advance in the transverse direction (Y-Y) along two advancement directions, to receive it and/or transfer it to and from the warehouse (100),
**characterized in that**:
- each of said first frames (120) and said second frame (310) comprises vertical and horizontal profiles connected to each other to form a rigid structure, so as to be able to receive and support at least one glass slab,
- each of said first frames (120) further comprises anti-friction brushes (160) fixed on said profiles and configured to support and guide the glass slabs during their translation inside one of said upper and lower support frames (110, 111),
- said shuttle (300) comprises a lifting unit (350) connected to the second frame (310) and configured to lift the second frame (310) so as to enable a glass slab to be received from, or to be transferred to, the upper support frame (111) superimposed on the lower support frame (110) of the warehouse (100), and
- said second frame (310) which is rotatably connected to the support structure (250) of said shuttle (300) comprises a control device (200) which is operable and selectively engageable with each first slab handling unit (130) so as to control a movement of said first slab handling unit (130).

2. System (1) according to claim 1, **characterized in that** the lifting unit (350) comprises a first arm (315) rotatably connected to the support structure (250), to arrange the second frame (310) from the horizontal position to the vertical/inclined position so as to align the second frame (310) to any of the first frames (120), and a second arm (316) rotatably connected to the first arm for lifting the second frame (310) so as to receive or transfer the glass slab to and from the upper support frame (111) superimposed on the lower support frame (110).

3. System (1) according to claim 1, **characterized in that** the second frame (310) comprises a crosspiece (312) extending along the transverse direction (Y-Y), and the control device (200) is connected to said crosspiece (312) so as to engage with a first slab handling unit (130) when the second frame (310) is in the vertical/inclined position and aligned with any of the first frames (120) to receive and/or transfer the glass slabs.

4. System (1) according to any one of the preceding claims, **characterized in that** the first slab handling unit (130) comprises a slab handling system (140) connected to each first frame (120), each slab handling system (140) being wound between two handling members (142) so as to advance in two forward directions.

5. System (1) according to any one of the preceding claims, **characterized in that** the second slab handling unit (330) comprises a slab handling system (140), for example a conveyor belt, connected to the second frame (310), each slab handling system (140) being wound between two handling members (142) so as to advance along two advancement directions both when the second frame (310) is in its horizontal position, to receive or transfer the glass slab, and when it is in its vertical/inclined position, for receiving or transferring the glass slab to and from the lower support frame (110) or the upper support frame (111) of the warehouse (100).

6. System (1) according to claim 5, **characterized in that** the control device (200) comprises a control member (210) which can be engaged in each of said movement members (142) so as to control their movement, so as to handle each glass slab resting on the slab handling system (140) of the first slab handling unit (130).

7. System (1) according to claim 8, **characterized in that** the control device (200) comprises movement means (230) configured to move the control member (210) to connect it to any movement member (142) of the slab handling system (140) in order to move the glass slabs to make them exit or enter the warehouse (100).

## Patentansprüche

1. System (1) zur Lagerung und Handhabung von Glasscheiben, umfassend ein Lager (100) zur Lagerung von Glasscheiben und einen Zubringer (300) zur Aufnahme und zum Transport der Glasscheiben von und zu dem Lager (100), welches umfasst:
- einen unteren Tragrahmen (110) und einen oberen Tragrahmen (111), die vertikal übereinander angeordnet sind;
- eine Vielzahl erster Rahmen (120), die an den oberen und unteren Tragrahmen (110, 111) befestigt sind, so dass in jedem der oberen und unteren Tragrahmen die ersten Rahmen (120) parallel zueinander sind und entlang einer Längsrichtung (X-X) quer zu der Ebene der ersten Rahmen (120) ausgerichtet sind, wobei jeder erste Rahmen (120) ausgebildet ist, mindestens eine Glasscheibe in einer vertikalen/geneigten Ausrichtung aufzunehmen und/oder zu transportieren und zu tragen;
- eine erste Scheibenhandhabungseinheit (130), die mit dem unteren Ende jedes ersten Rahmens (120) verbunden ist und sich entlang einer Querrichtung (Y-Y) zu der Längsrichtung (X-X) erstreckt und die ausgebildet ist, mindestens eine Glasscheibe zu tragen und eine Bewegung dieser vorwärts in der Querrichtung (YY) entlang zweier Vorwärtsrichtungen zu verursachen,
wobei der Zubringer (300) zur Aufnahme und zum Transport der Glasscheiben von und zu dem Lager (100) umfasst:
- eine Tragestruktur (250), die entlang einer zu der Längsrichtung (X-X) parallelen Richtung verschiebbar ist;
- einen zweiten Rahmen (310), der drehbar mit der Tragestruktur (250) verbunden ist, um sich zwischen einer horizontalen und einer im Wesentlichen vertikalen/geneigten Position zu positionieren, um den zweiten Rahmen (310) zu einem der ersten Rahmen (120) auszurichten;
- eine zweite Scheibenhandhabungseinheit (330), die mit dem zweiten Rahmen (310) verbunden ist und sich entlang einer Querrichtung (Y-Y) zu der Längsrichtung (X-X) erstreckt und die ausgebildet ist, mindestens eine Glasscheibe zu tragen und eine Bewegung dieser in der Querrichtung (Y-Y) entlang zweier Vorwärtsrichtungen zu verursachen, um diese aufzunehmen und zu und/oder von dem Lager (100) zu transportieren,
**dadurch gekennzeichnet, dass**:
- jeder der ersten Rahmen (120) und der zweite Rahmen (310) vertikale und horizontale Profile umfasst, die miteinander verbunden sind, um eine starre Struktur zu bilden, um zu ermöglichen, mindestens eine Glasscheibe aufzunehmen und zu tragen,
- jeder der ersten Rahmen (120) ferner reibungsmindernde Bürsten (160) umfasst, die an den Profilen befestigt und ausgebildet sind, die Glasscheiben während ihrer Verschiebung innerhalb eines der oberen und unteren Tragrahmen (110, 111) zu tragen und zu führen,
- der Zubringer (300) eine Hebeeinheit (350) umfasst, die mit dem zweiten Rahmen (310) verbunden ist und ausgebildet ist, den zweiten Rahmen (310) anzuheben, um die Aufnahme einer Glasscheibe von oder den Transport einer Glasscheibe an den oberen Tragrahmen (111) zu ermöglichen, der auf dem unteren Tragrahmen (110) des Lagers (100) aufliegt, und
- wobei der zweite Rahmen (310), der drehbar mit der Tragestruktur (250) des Zubringers (300) verbunden ist, eine Steuervorrichtung (200) umfasst, die bedienbar und mit jeder ersten Scheibenhandhabungseinheit (130) selektiv in Eingriff bringbar ist, um eine Bewegung der ersten Scheibenhandhabungseinheit (130) zu steuern.

2. System (1) nach Anspruch 1, **dadurch gekennzeichnet, dass** die Hebeeinheit (350) einen ersten Arm (315) umfasst, der drehbar mit der Tragestruktur (250) verbunden ist, um den zweiten Rahmen (310) aus der horizontalen Position in die vertikale/geneigte Position anzuordnen, um den zweiten Rahmen (310) an einem der ersten Rahmen (120) auszurichten, und einen zweiten Arm (316) umfasst, der drehbar mit dem ersten Arm verbunden ist, um den zweiten Rahmen (310) anzuheben, um die Glasscheibe aufzunehmen oder von und zu dem oberen Tragrahmen (111) zu transportieren, der auf dem unteren Tragrahmen (110) aufliegt.

3. System (1) nach Anspruch 1, **dadurch gekennzeichnet, dass** der zweite Rahmen (310) ein sich entlang der Querrichtung (Y-Y) erstreckendes Querstück (312) aufweist, und wobei die Steuereinrichtung (200) mit dem Querstück (312) verbunden ist, um mit einer ersten Scheibenhandhabungseinheit (130) einzugreifen, wenn sich der zweite Rahmen (310) in der vertikalen/geneigten Position befindet und mit einem der ersten Rahmen (120) ausgerichtet ist, um die Glasscheiben aufzunehmen und/oder zu transportieren.

4. System (1) nach einem der vorhergehenden Ansprüche, **dadurch gekennzeichnet, dass** die erste Scheibenhandhabungseinheit (130) ein Scheibenhandhabungssystem (140) umfasst, das mit jedem ersten Rahmen (120) verbunden ist, wobei jedes Scheibenhandhabungssystem (140) zwischen zwei Handhabungselementen (142) aufgewickelt ist, um sich in zwei Vorwärtsrichtungen zu bewegen.

5. System (1) nach einem der vorhergehenden Ansprüche, **dadurch gekennzeichnet, dass** die zweite Scheibenhandhabungseinheit (330) ein mit dem zweiten Rahmen (310) verbundenes Scheibenhandhabungssystem (140) umfasst, beispielsweise ein Förderband, wobei jedes Scheibenhandhabungssystem (140) zwischen zwei Handhabungselementen (142) gewickelt ist, um entlang zweier Vorwärtsrichtungen vorzurücken, sowohl wenn sich der zweite Rahmen (310) in seiner horizontalen Position befindet, um die Glasscheibe aufzunehmen oder zu transportieren, als auch wenn dieser sich in seiner vertikalen/geneigten Position zum Aufnehmen oder Transportieren der Glasscheibe von und zu dem unteren Tragrahmen (110) oder dem oberen Tragrahmen (111) des Lagers (100) befindet.

6. System (1) nach Anspruch 5, **dadurch gekennzeichnet, dass** die Steuervorrichtung (200) ein Steuerelement (210) umfasst, das in jedes der Bewegungselemente (142) eingreifbar ist, um deren Bewegung zu steuern, um jede Glasscheibe zu handhaben, die auf dem Scheibenhandhabungssystem (140) der ersten Scheibenhandhabungseinheit (130) liegt.

7. System (1) nach Anspruch 8, **dadurch gekennzeichnet, dass** die Steuervorrichtung (200) Bewegungsmittel (230) umfasst, die ausgebildet sind, das Steuerelement (210) zu bewegen, um es mit einem der Bewegungselemente (142) des Scheibenhandhabungssystems (140) zu verbinden, um die Glasscheiben zum Verlassen oder Eintreten des Lagers (100) zu bewegen.

## Revendications

1. Système (1) de stockage et de manutention de dalles de verre comprenant un entrepôt (100) pour le stockage de dalles de verre et une navette (300) pour la réception et le transfert des dalles de verre depuis et vers ledit entrepôt (100), qui comprend :
- un cadre de support inférieur (110) et un cadre de support supérieur (111), superposés verticalement l'un à l'autre ;
- une pluralité de premiers cadres (120) fixés auxdits cadres de support inférieur et supérieur (110, 111) de sorte que, dans chacun desdits cadres de support supérieur et inférieur, les premiers cadres (120) soient parallèles entre eux et alignés le long d'une direction longitudinale (X-X) transversale au plan desdits premiers cadres (120), chaque premier cadre (120) étant configuré pour recevoir et/ou transférer et supporter au moins une dalle de verre dans une orientation verticale/inclinée ;
- une première unité de manutention de dalles (130) reliée à l'extrémité inférieure de chaque premier cadre (120) et s'étendant le long d'une direction transversale (Y-Y) à ladite direction longitudinale (X-X), configurée pour supporter au moins une dalle de verre et la déplacer vers l'avant dans la direction transversale (YY), le long de deux directions d'avancement,
ladite navette (300) de réception et de transfert des dalles de verre vers et depuis l'entrepôt (100) comprenant :
- une structure de support (250) pouvant être déplacée en translation le long d'une direction parallèle à ladite direction longitudinale (X-X) ;
- un deuxième cadre (310) relié en rotation à la structure de support (250) pour se positionner entre une position horizontale et une position sensiblement verticale/inclinée de manière à aligner le deuxième cadre (310) sur l'un des premiers cadres (120) ;
- une deuxième unité de manutention de dalles (330) reliée au deuxième cadre (310) et s'étendant le long d'une direction transversale (Y-Y) à ladite direction longitudinale (X-X), configurée pour supporter au moins une dalle de verre et la faire avancer dans la direction transversale (Y-Y) le long des deux directions d'avancement, pour la recevoir et/ou la transférer vers et depuis l'entrepôt (100),
**caractérisé en ce que** :
- chacun desdits premiers cadres (120) et dudit deuxième cadre (310) comprend des profils vertical et horizontal reliés entre eux pour former une structure rigide, de manière à pouvoir recevoir et supporter au moins une dalle de verre,
- chacun desdits premiers cadres (120) comprend en outre des brosses anti-friction (160) fixées sur lesdits profils et configurées pour supporter et guider les dalles de verre lors de leur translation à l'intérieur d'un cadre desdits cadres de support inférieur et supérieur (110, 111),
- ladite navette (300) comprend une unité de levage (350) reliée au deuxième cadre (310) et configurée pour soulever le deuxième cadre (310) de manière à permettre à une dalle de verre d'être reçue depuis, ou d'être transférée vers, le cadre de support supérieur (111) superposé au cadre de support inférieur (110) de l'entrepôt (100), et
- ledit deuxième cadre (310) qui est relié en rotation à la structure de support (250) de ladite navette (300) comprend un dispositif de commande (200) qui peut fonctionner et sélectivement s'engager avec chaque première unité de manutention de dalles (130) de manière à commander un mouvement de ladite première unité de manutention de dalles (130).

2. Système (1) selon la revendication 1, **caractérisé en ce que** l'unité de levage (350) comprend un premier bras (315) relié en rotation à la structure de support (250), pour agencer le deuxième cadre (310) de la position horizontale à la position verticale/inclinée de manière à aligner le deuxième cadre (310) sur l'un des premiers cadres (120), et un deuxième bras (316) relié en rotation au premier bras pour soulever le deuxième cadre (310) de manière à recevoir ou transférer la dalle de verre vers et depuis le cadre de support supérieur (111) superposé au cadre de support inférieur (110).

3. Système (1) selon la revendication 1, **caractérisé en ce que** le deuxième cadre (310) comprend une traverse (312) s'étendant le long de la direction transversale (Y-Y), et le dispositif de commande (200) est relié à ladite traverse (312) de manière à s'engager avec une première unité de manutention de dalles (130) lorsque le deuxième cadre (310) est en position verticale/inclinée et aligné avec l'un des premiers cadres (120) pour recevoir et/ou transférer les dalles de verre.

4. Système (1) selon l'une quelconque des revendications précédentes, **caractérisé en ce que** la première unité de manutention de dalles (130) comprend un système de manutention de dalles (140) relié à chaque premier cadre (120), chaque système de manutention de dalles (140) étant enroulé entre deux éléments de manutention (142) de manière à avancer dans deux directions vers l'avant.

5. Système (1) selon l'une quelconque des revendications précédentes, **caractérisé en ce que** la deuxième unité de manutention de dalles (330) comprend un système de manutention de dalles (140), par exemple un tapis roulant, relié au deuxième cadre (310), chaque système de manutention de dalles (140) étant enroulé entre deux éléments de manutention (142) de manière à avancer le long de deux directions d'avancement à la fois lorsque le deuxième cadre (310) est dans sa position horizontale, pour recevoir ou transférer la dalle de verre, et lorsqu'il est dans sa position verticale/inclinée, pour recevoir ou transférer la dalle de verre vers et depuis le cadre de support inférieur (110) ou le cadre de support supérieur (111) de l'entrepôt (100).

6. Système (1) selon la revendication 5, **caractérisé en ce que** le dispositif de commande (200) comprend un élément de commande (210) qui peut être engagé dans chacun desdits éléments de déplacement (142) de manière à commander leur mouvement, de manière à manipuler chaque dalle de verre reposant sur le système de manutention de dalles (140) de la première unité de manutention de dalles (130).

7. Système (1) selon la revendication 8, **caractérisé en ce que** le dispositif de commande (200) comprend des moyens de déplacement (230) configurés pour déplacer l'élément de commande (210) pour le relier à tout élément de déplacement (142) du système de manutention de dalles (140) afin de déplacer les dalles de verre pour les faire sortir de l'entrepôt (100) ou entrer dans celui-ci.
